# EUROPEAN PATENT APPLICATION

(11) **EP 4 300 293 A1**
(43) Date of publication of application: **03.01.2024**
(21) Application number: 23173287.6
(22) Date of filing: 15.05.2023
(51) Int. Cl.: G06F 9/30

(54) **ADD WITH ROTATION INSTRUCTION AND SUPPORT**

(30) Priority: 02.07.2022 US 202217856980
(71) Applicant: Intel Corporation, Santa Clara, CA 95054 (US)
(72) Inventor: Madduri, Venkateswara Rao, Austin, TX 78733 (US)
(74) Representative: Samson & Partner Patentanwälte mbB

(57) **Abstract**

Techniques for performing an add plus rotation instruction are described. An example of an instruction for performing the add plus rotation is to include one or more fields to reference a first source operand, one or more fields to reference a second source operand, one or more fields to reference a destination operand, and one or more fields for an opcode, the opcode to indicate execution circuitry is to perform addition of data elements of corresponding data element positions of the first and second source operand, wherein data elements of the second source operand are to be positionally rotated prior to the addition according to rotation information and a result of each addition is to be stored in a corresponding data element position of the destination operand.

## Description

### BACKGROUND

Digital signal processing (DSP) includes a wide range of operations such as fast Fourier transforms (FFT), filtering, pattern matching, correlation, polynomial evaluation, statistical operations (mean, moving average, variance, etc.), and neural networks.

### BRIEF DESCRIPTION OF DRAWINGS

Various examples in accordance with the present disclosure will be described with reference to the drawings, in which:
FIG. 1 illustrates example executions of a packed add with rotation (and in some examples optional halving) instruction.
FIG. 2 illustrates examples of rotation of a second source.
FIG. 3 illustrates examples of computing hardware to process at least a DVPCADDROTSRA instruction.
FIG. 4 illustrates an example method performed by a processor to process a packed add with rotation (and in some examples optional halving) instruction.
FIGS. 5 and 6 illustrate more detailed examples of pseudocode representing the execution of an DVPCADDROTSRA instruction.
FIG. 7 illustrates an example method to process a packed add with rotation (and in some examples optional halving) instruction using emulation or binary translation.
FIG. 8 illustrates an example computing system.
FIG. 9 illustrates a block diagram of an example processor and/or System on a Chip (SoC) that may have one or more cores and an integrated memory controller.
FIG. 10(A) is a block diagram illustrating both an example in-order pipeline and an example register renaming, out-of-order issue/execution pipeline according to examples.
FIG. 10(B) is a block diagram illustrating both an example in-order architecture core and an example register renaming, out-of-order issue/execution architecture core to be included in a processor according to examples.
FIG. 11 illustrates examples of execution unit(s) circuitry.
FIG. 12 is a block diagram of a register architecture according to some examples.
FIG. 13 illustrates examples of an instruction format.
FIG. 14 illustrates examples of an addressing information field.
FIG. 15 illustrates examples of a first prefix.
FIGS. 16(A)-(D) illustrate examples of how the R, X, and B fields of the first prefix in FIG. 15 are used.
FIGS. 17(A)-(B) illustrate examples of a second prefix.
FIG. 18 illustrates examples of a third prefix.
FIG. 19 is a block diagram illustrating the use of a software instruction converter to convert binary instructions in a source instruction set architecture to binary instructions in a target instruction set architecture according to examples.

### DETAILED DESCRIPTION

The present disclosure relates to methods, apparatus, systems, and non-transitory computer-readable storage media for performing a complex add with rotation and optional halving using a single instruction.

In some examples, the instruction(s) detailed herein are used to improve Q15 radix-4 FFT calculations. For example, in a first stage all input data is scaled to half. In middle stages, the second add/sub and multiply are scaled to half, then it can be made sure the first add of next stage will not overflow, so 1 guard bit is enough for the 3 way add like *c'=(a+c)-(b+d).*

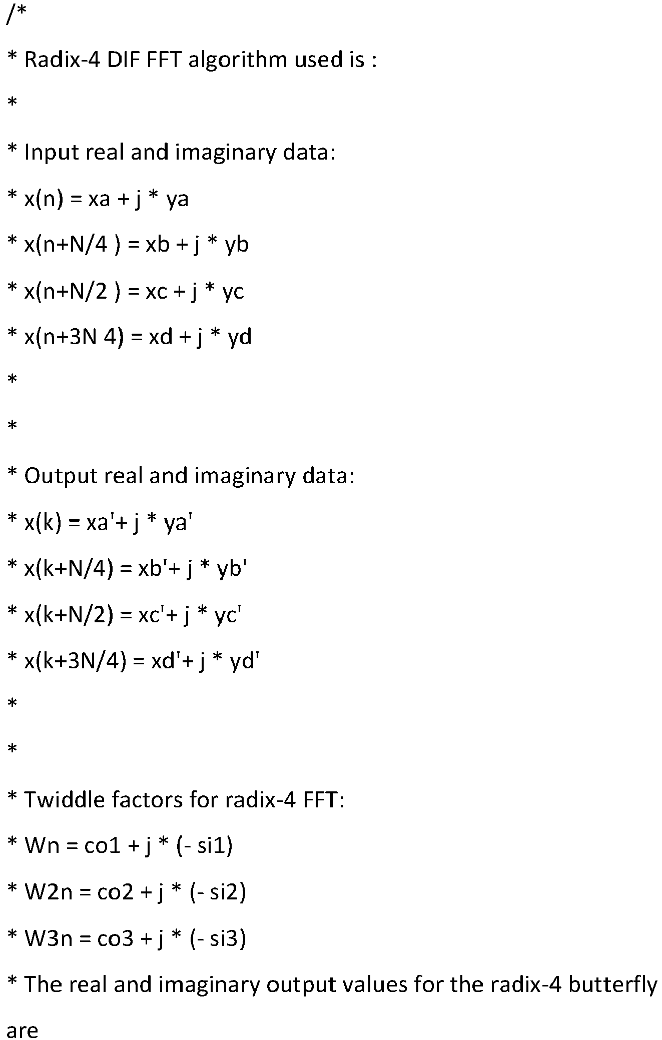

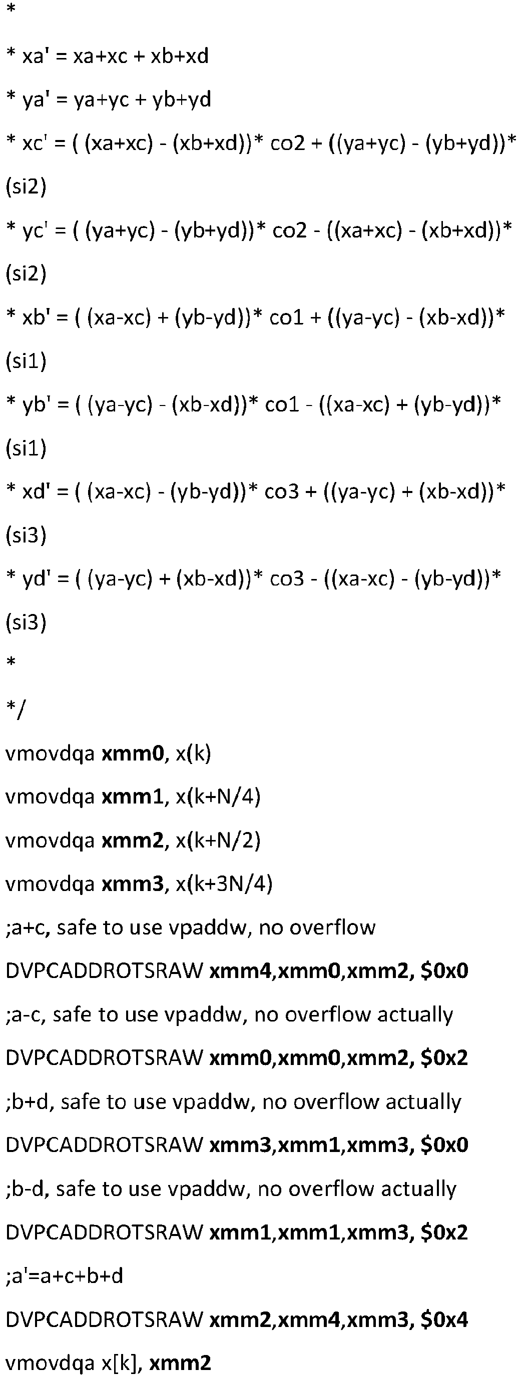

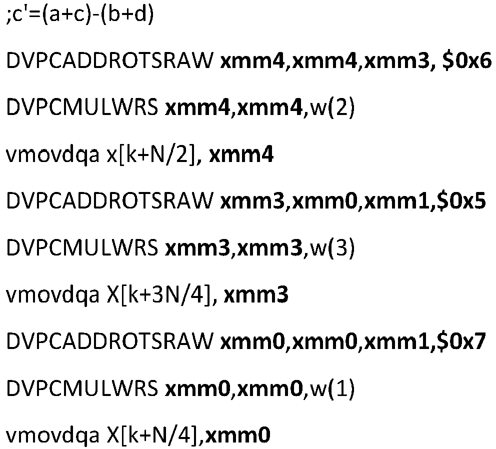

Another example of code without a packed add with rotation is: static const Ipp32s min32s[] = {0x80000000, 0x80000000, 0x80000000, 0x80000000};

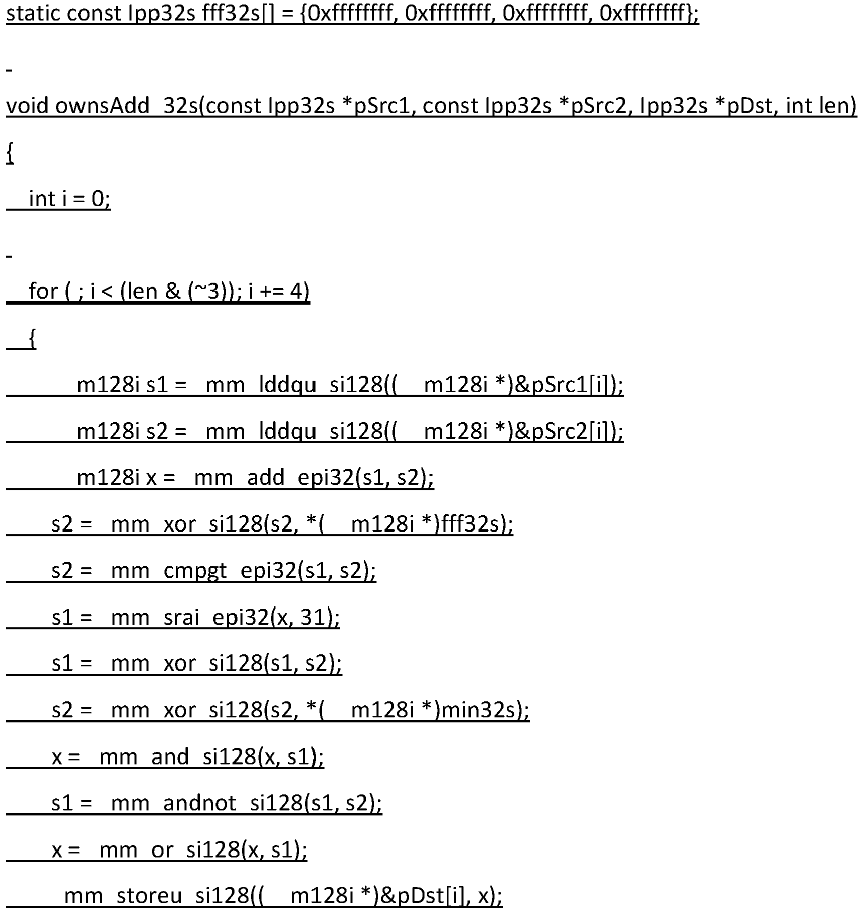

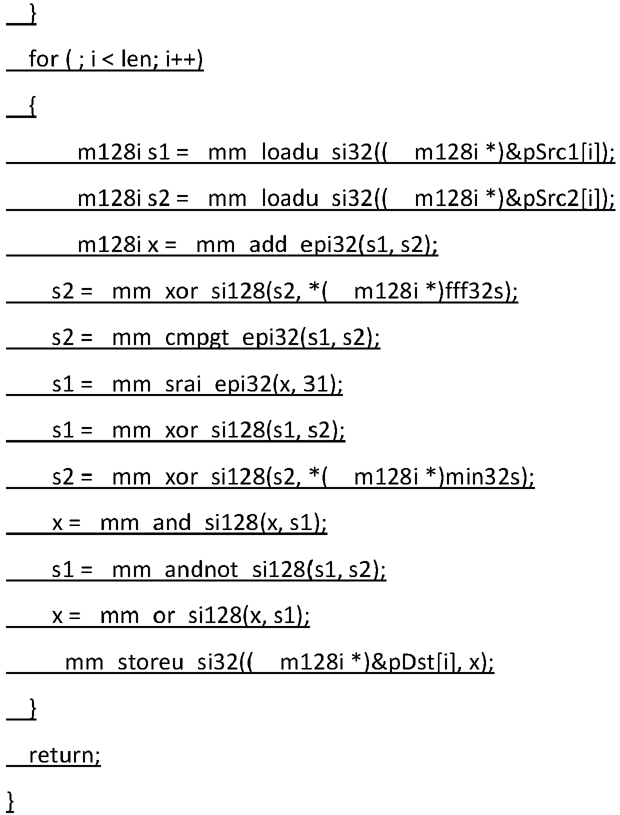

Multiple operations in the above can be replaced with the packed add with rotation instruction improving code density and performance:

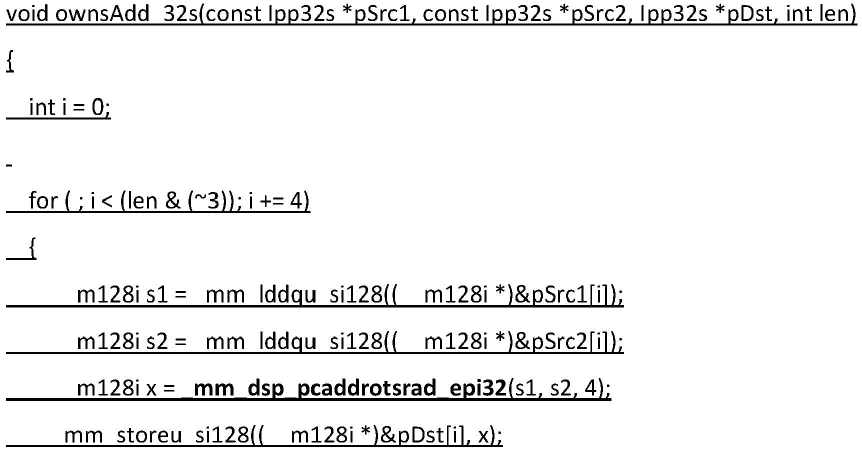

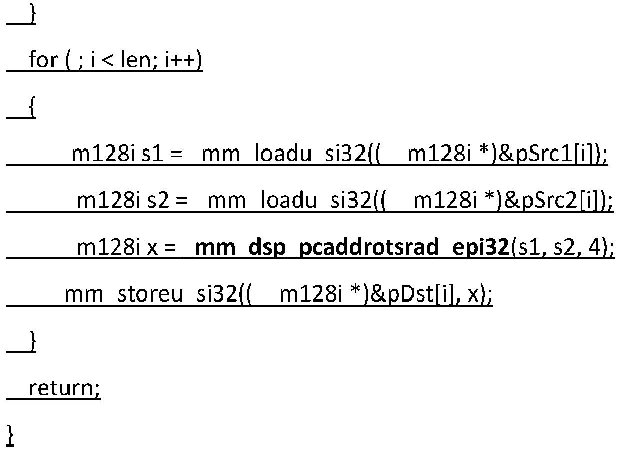

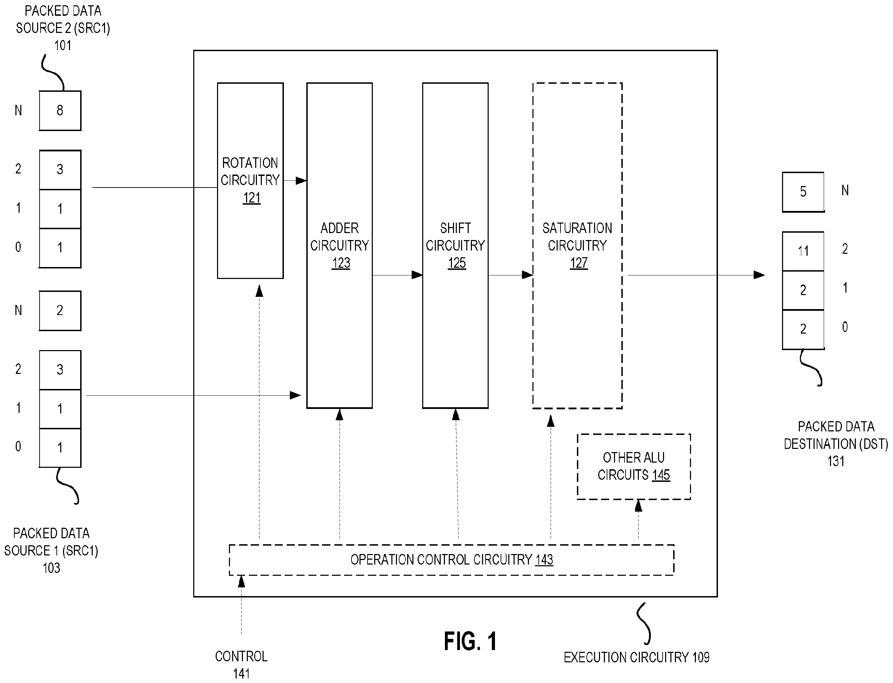

FIG. 1 illustrates example executions of a packed add with rotation (and in some examples optional halving) instruction. In the discussion below, at times this instruction will be referred to as DVPCADDROTSRA. While this illustration is in little endian format, the principles discussed herein work in big endian format. In this example, the execution of the packed add with rotation (and in some examples optional halving) instruction performs a packed data addition of data elements of a first and a second source with a potential rotation of data elements of the second source prior to the addition. In some examples, the rotation amount (0 degrees, 90 degrees, 180 degrees, or 270 degrees) is specified by one or more bits of an immediate. In some examples, a result of the additions is right shifted when indicated by a particular bit of the immediate. In some examples, the result of the addition (and, in some examples, subsequent right shift) is saturated to a signed value (e.g., signed word or double word). A result of adding SRC2[0] after rotation and SRC1 [0] is stored in DST[0] (potentially subject to a saturation operation). In other words, the addition result (potentially subject to saturation result) is stored in a data element position of the destination that corresponds to the data element position of the sources. In some examples, a bit in a control register 1255 (e.g., a control and status register such as MSCSR) is set to indicate saturation occurred.

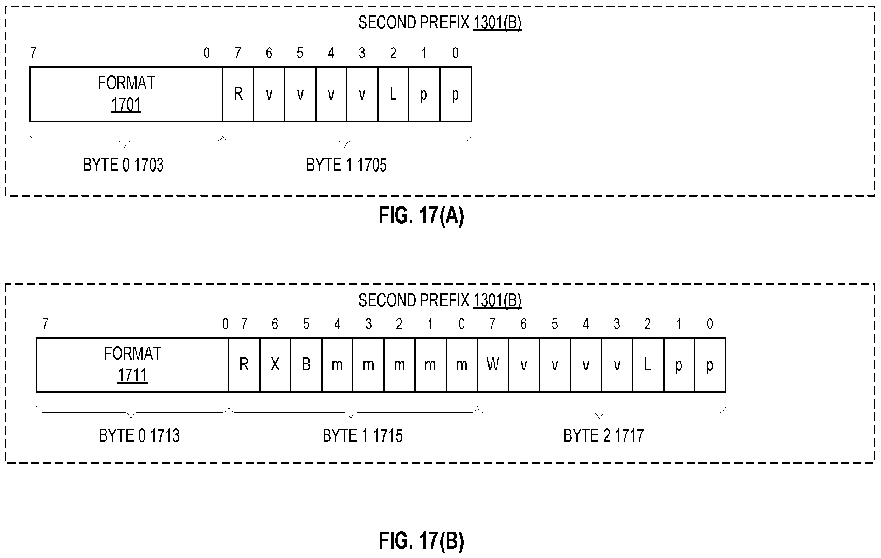

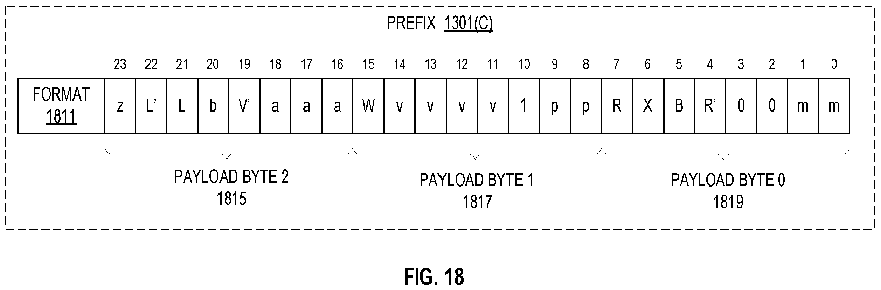

Examples of a format for a packed add with rotation (and in some examples optional halving) instruction include DVPCADDROTSRA[W, D] DST, SRC1, SCR2 IMM. In some examples, DVPCADDROTSRA is a base opcode mnemonic of the instruction which may be supplemented as detailed above. W indicates word sized (16-bit) data elements and D indicates double word sized data elements (32-bit) For example, DVPCADDROTSRAW indicates a packed add with rotation (and in some examples optional halving) using word sized data elements and DVPCADDROTSRAD uses double word sized. The opcode 1303 itself, and potentially aspects of a prefix 1301, provides an indication that a packed add with rotation (and in some examples optional halving) is to be performed (and data sizes, etc.). In some examples, the immediate (IMM) (e.g., 1309) provides an indication of a rotation amount of numbers in SRC2 and an indication of if the addition results should be halved. DST is indicated by at least one field to identify a destination operand such as packed data register or memory location. In some examples, the destination operand is identified via at least REG 1444. SRC1 and SCR2 are packed data registers and/or memory. In some examples, an identifier of the first source (SRC1) is provided by VVVV from 1817, 1705, or 1717. In some examples, the second source identifier is provided by at least R\M 1446. Note that additional information from the SIB Byte 1404 may also be used. Additionally, the R bit or RXB bits from a prefix is used in some examples for identifying a one of the destination, first source, and/or second source. In some examples, the instruction uses a VEX prefix. In some examples, the VEX prefix is illustrated in FIGS. 17(A)-(B). In some examples, the instruction uses a EVEX prefix. In some examples, the EVEX prefix is illustrated in FIG. 18. In some examples, a pair of adjacent data element positions of a source comprise a complex number. For example, with a first of the data element positions to store a real component of the complex number and a second of the data element positions to store an imaginary component of the complex number. In some examples, odd data elements positions store real components. In some examples, even data elements positions store real components. In some examples, the opcode and prefix is VEX.128.F3.0F3A.W0/A3/r. In some examples, the opcode and prefix is VEX.128.66.0F3A.W0/A3/r.

Examples of a format for a packed add with rotation (and in some examples optional halving) instruction include DVPCADDROTSRA[W, D][ROTATION][HALVED] DST, SRC1, SCR2. In some examples, DVPCADDROTSRA is a base opcode mnemonic of the instruction which may be supplemented as detailed above. W indicates word sized (16-bit) data elements and D indicates double word sized data elements (32-bit). Rotation indicates the rotation amount and halved indicates if the addition results are to be halved. For example, DVPCADDROTSRAW90 indicates a packed add with 90-degree rotation of the second source data elements (and no halving) using word sized data elements. The opcode 1303 itself, and potentially aspects of a prefix 1301, provides an indication that a packed add with rotation (and in some examples optional halving) is to be performed (and data sizes, etc.). In some examples, the immediate (IMM) (e.g., 1309) provides an indication of a rotation amount of numbers in SRC2 and an indication of if the addition results should be halved. DST is indicated by at least one field to identify a destination operand such as packed data register or memory location. In some examples, the destination operand is identified via at least REG 1444. SRC1 and SCR2 are packed data registers and/or memory. In some examples, an identifier of the first source (SRC1) is provided by VVVV from 1817, 1705, or 1717. In some examples, the second source identifier is provided by at least R\M 1446. Note that additional information from the SIB Byte 1404 may also be used. Additionally, the R bit or RXB bits from a prefix is used in some examples for identifying a one of the destination, first source, and/or second source. In some examples, the instruction uses a VEX prefix. In some examples, the VEX prefix is illustrated in FIGS. 17(A)-(B). In some examples, the instruction uses a EVEX prefix. In some examples, the EVEX prefix is illustrated in FIG. 18. In some examples, a pair of adjacent data element positions of a source comprise a complex number. For example, with a first of the data element positions to store a real component of the complex number and a second of the data element positions to store an imaginary component of the complex number. In some examples, odd data elements positions store real components. In some examples, even data elements positions store real components. In some examples, the opcode and prefix is VEX.128.F3.0F3A.W0/A3/r. In some examples, the opcode and prefix is VEX.128.66.0F3A.W0/A3/r.

In this illustration, a first packed data source (SRC1) 103 and a second packed data source (SRC2) 101 each store a plurality of packed data elements (shown here as 0 to N). As noted above, in some examples SRC1 103 and/or SRC2 101 is a packed data (e.g., vector or SIMD) register (e.g., a 128-bit, 256-bit, 512-bit register, etc.). In other examples, one or more of SRC1 103 and/or SRC2 101 is one or more locations in memory. In some examples, a pair of adjacent data element positions comprises a complex number. For example, with a first of the data element positions to store a real component of the complex number and a second of the data element positions to store an imaginary component of the complex number. In some examples, odd data elements positions store real components. In some examples, even data elements positions store real components.

SRC1103 and/or SRC2 101 are provided to execution circuitry 109 which is to perform the packed add with rotation (and in some examples optional halving). In some examples, rotation circuitry 121 rotates data elements of SRC2 101 by 0, 90, 180, or 270 degrees. In some examples, the rotation amount is provided by an immediate of the instruction. For example, imm[1:0] = 2'b00 represents 0 degree rotation, imm[1:0] = 2'b01 represents 90 degree rotation, imm[1:0] = 2'b10 represents 18 degree rotation, and imm[1:0] = 2'b11 represents 270 degree rotation. In some examples, the immediate is an 8-bit value. In some examples, the rotation amount is provided by an opcode of the instruction.

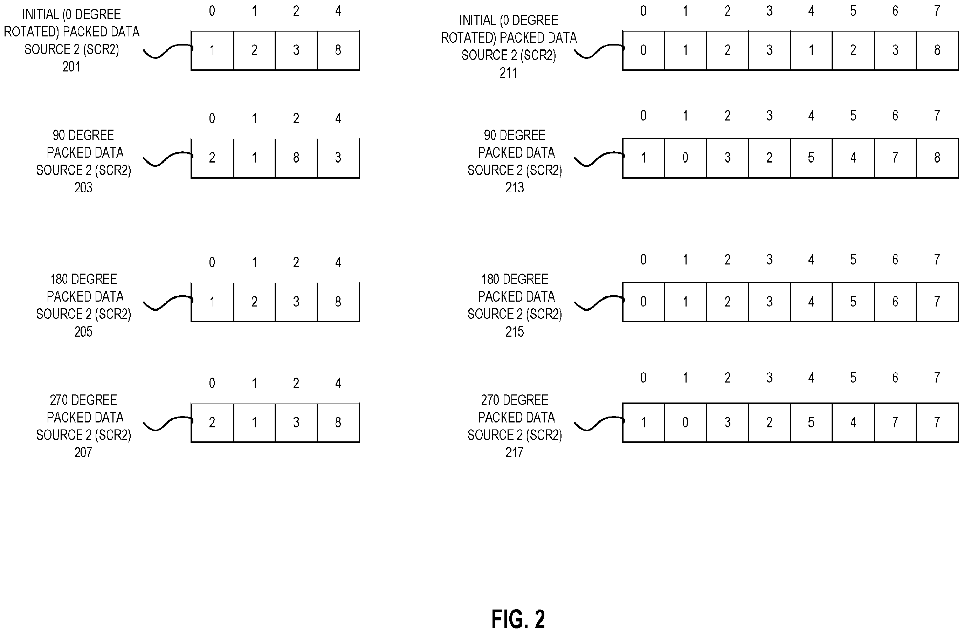

FIG. 2 illustrates examples of rotation of a second source. For a four data element source, the initial (or 0 degree rotation) is shown at 201, a 90 degree rotation is shown in 203, a 180 degree rotation is shown in 205, and a 270 degree rotation is shown in 207.

For an eight data element source, the initial (or 0 degree rotation) is shown at 211, a 90 degree rotation is shown in 213, a 180 degree rotation is shown in 215, and a 270 degree rotation is shown in 217.

The (rotated) data elements of the second source 101 are added to data elements of corresponding data element positions of the first source 103 using adder circuitry 123. In some examples, the data elements are extended by one bit in the most significant bit position prior to addition. In some examples, that extension is a copy of the most significant bit position of the data element. For example, a 16-bit value will become a 17-bit value.

In some examples, the result the additions, are shifted by 1 bit using shift circuitry 125. In some examples, the shift is an arithmetic right shift by 1 bit. In some examples, the immediate of the instruction provides this indication. For example, imm[2]=1 indicates a shift. Note that halving is accomplished by the shift.

In some examples, the (shifted) results are saturated to a signed value using saturation circuitry127.

In this illustration, the second source 101 is rotated by 90 degrees and there is no shift

In some examples, the execution circuitry 109 is a part of a pipeline execution (such an execute stage 1016). In some examples, the execution circuitry 109 is a part of, or comprises, execution unit(s) circuitry 1062 and/or execution circuitry 309. The execution circuitry 109 comprises combinational logic circuitry in some examples.

In some examples, a decoder and/or scheduler provides information (as control 141) to the execution circuitry 109 that allows for the proper execution unit type (e.g., integer adder) to be used. In some examples, operation control circuitry 143 configures the execution circuitry 109 according to that control information 141 to use one or more integer adders instead of other ALU circuits 145 such as Boolean logic circuits, etc. In some examples, the operation control circuitry 143 is external to the execution circuitry 109 such as a part of a scheduler such as scheduler 1056. Note that the information may include information from the immediate of the instruction.

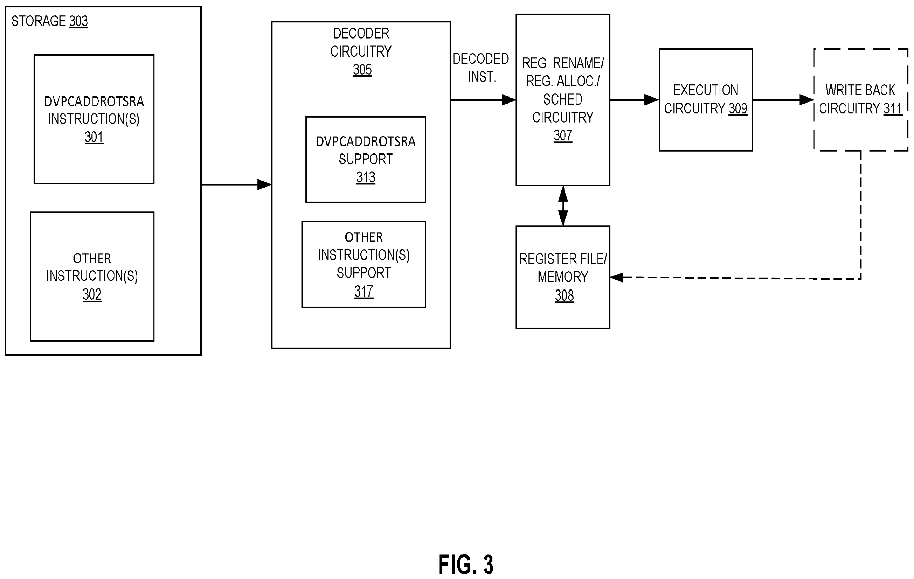

FIG. 3 illustrates examples of computing hardware to process at least a DVPCADDROTSRA instruction. As illustrated, storage 303 stores at least an instance of a DVPCADDROTSRA instruction 301 to be executed. The storage 303 may also store other instructions 302.

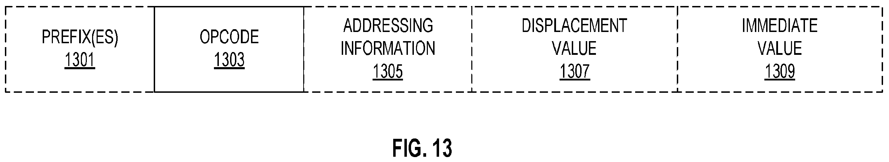

The instruction 301 is received by decoder circuitry 305 which includes DVPACADDROTSRA support 313 and other instruction(s) support 317. For example, the decoder circuitry 305 receives this instruction from fetch circuitry (not shown). The instruction may be in any suitable format, such as that described with reference to FIG. 13 below.

More detailed examples of at least one instruction format for the instruction will be detailed later. The decoder circuitry 305 decodes the instruction into one or more operations. In some examples, this decoding includes generating a plurality of micro-operations to be performed by execution circuitry (such as execution circuitry 309). The decoder circuitry 305 also decodes instruction prefixes.

In some examples, register renaming, register allocation, and/or scheduling circuitry 307 provides functionality for one or more of: 1) renaming logical operand values to physical operand values (e.g., a register alias table in some examples), 2) allocating status bits and flags to the decoded instruction, and 3) scheduling the decoded instruction for execution by execution circuitry out of an instruction pool (e.g., using a reservation station in some examples).

Registers (register file) and/or memory 308 store data as operands of the instruction to be operated by execution circuitry 309. Example register types include packed data registers, general purpose registers (GPRs), and floating-point registers.

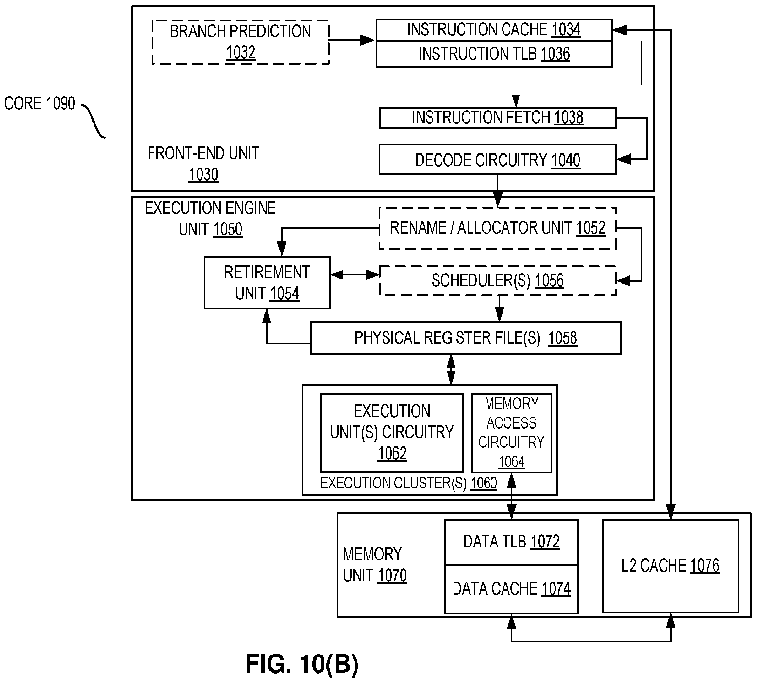

Execution circuitry 309 executes the decoded instruction. Example detailed execution circuitry includes execution circuitry 109 shown in FIG. 1, and execution cluster(s) 1060 shown in FIG. 10(B), etc. The execution of the decoded instruction causes the execution circuitry to the operation as indicated by the opcode (and/or as defined by the immediate).

In some examples, retirement/write back circuitry 311 architecturally commits the destination register into the registers or memory 308 and retires the instruction.

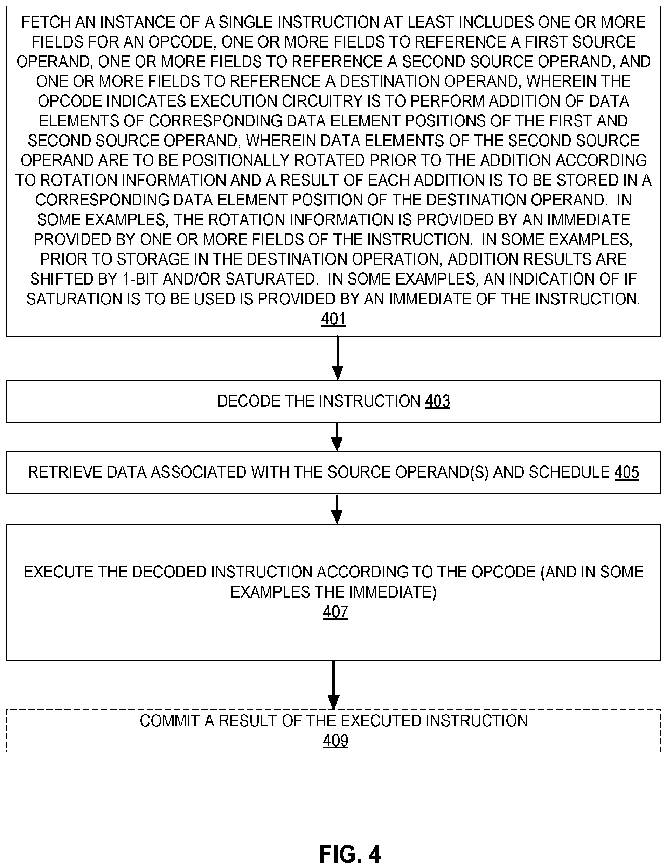

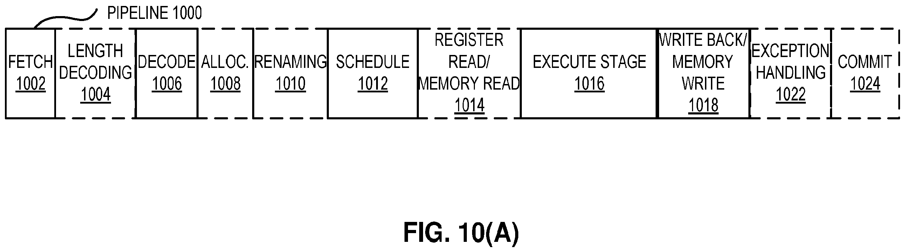

FIG. 4 illustrates an example method performed by a processor to process a packed add with rotation (and in some examples optional halving) instruction. For example, a processor core as shown in FIG. 10(B), a pipeline as detailed below, etc., performs this method.

At 401, an instance of single instruction is fetched. For example, a packed add with rotation (and in some examples optional halving) instruction is fetched. The instruction at least includes one or more fields for an opcode, one or more fields to reference a first source operand, one or more fields to reference a second source operand, and one or more fields to reference a destination operand, wherein the opcode indicates execution circuitry is to perform addition of data elements of corresponding data element positions of the first and second source operand, wherein data elements of the second source operand are to be rotated prior to the addition according to rotation information and a result of each addition is to be stored in a corresponding data element position of the destination operand. In some examples, the rotation information is provided by an immediate provided by one or more fields of the instruction. In some examples, prior to storage in the destination operation, addition results are shifted by 1-bit and/or saturated. In some examples, an indication of if saturation is to be used is provided by an immediate of the instruction. In some examples, the instruction is fetched from an instruction cache.

The fetched instruction is decoded at 403. For example, the fetched packed add with rotation (and in some examples optional halving) instruction is decoded by decoder circuitry such as decoder circuitry 305 or decode circuitry 1040 detailed herein.

Data values associated with the source operands of the decoded instruction are retrieved when the decoded instruction is scheduled at 405. For example, when one or more of the source operands are memory operands, the data from the indicated memory location is retrieved. In some examples, the decoded instruction (e.g., a micro-ops) is scheduled and the execution circuitry configured to execute the decoded instruction.

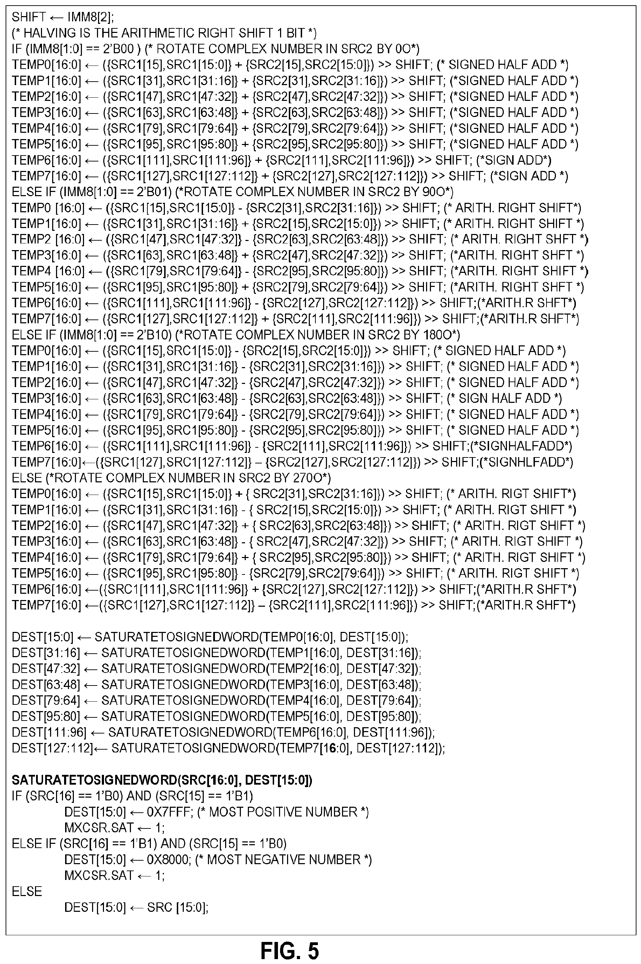

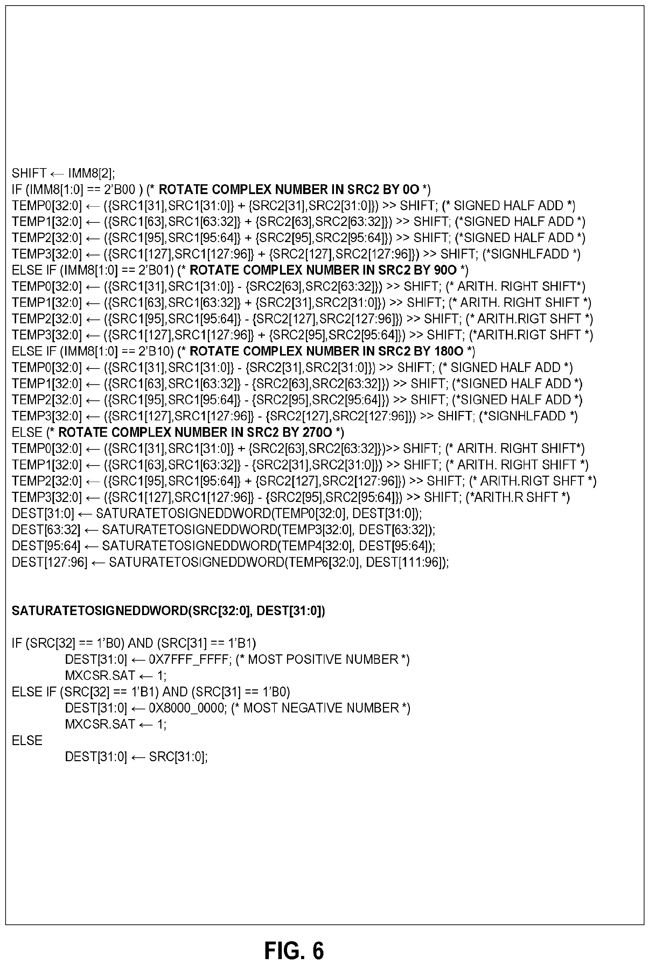

At 407, the decoded instruction is executed by execution circuitry (hardware) such as execution circuitry 109 shown in FIG. 1, execution circuitry 309 shown in FIG. 3, or execution cluster(s) 1060 shown in FIG. 10(B). For the packed add with rotation (and in some examples optional halving) instruction, the execution will cause execution circuitry to perform the operations described in connection with, for example, FIG. 1. FIGS. 5 and 6 illustrate more detailed examples of pseudocode representing the execution of such an instruction. Note that the addition, etc. calculations may be performed in parallel.

In some examples, the instruction is committed or retired at 409.

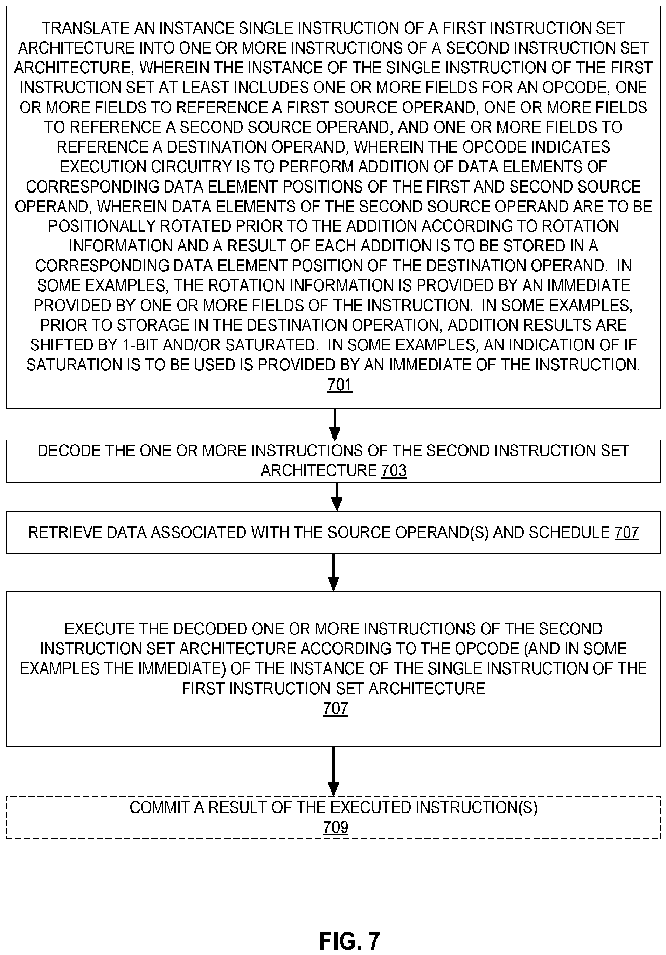

FIG. 7 illustrates an example method to process a packed add with rotation (and in some examples optional halving) instruction using emulation or binary translation. For example, a processor core as shown in FIG. 10(B), a pipeline and/or emulation/translation layer perform aspects of this method.

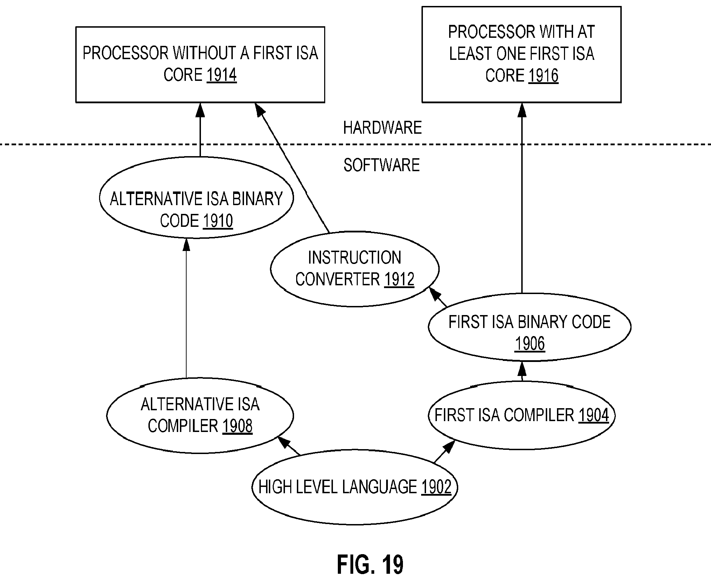

An instance of a single instruction of a first instruction set architecture is translated into one or more instructions of a second instruction set architecture at 701. The instance of the single instruction of the first instruction set at least includes one or more fields for an opcode, one or more fields to reference a first source operand, one or more fields to reference a second source operand, and one or more fields to reference a destination operand, wherein the opcode indicates execution circuitry is to perform addition of data elements of corresponding data element positions of the first and second source operand, wherein data elements of the second source operand are to be rotated prior to the addition according to rotation information and a result of each addition is to be stored in a corresponding data element position of the destination operand, in some examples, the rotation information is provided by an immediate provided by one or more fields of the instruction. in some examples, prior to storage in the destination operation, addition results are shifted by 1-bit and/or saturated. in some examples, an indication of if saturation is to be used is provided by an immediate of the instruction. This translation is performed by a translation and/or emulation layer of software in some examples. In some examples, this translation is performed by an instruction converter 1912 as shown in FIG. 19. In some examples, the translation is performed by hardware translation circuitry.

The one or more translated instructions of the second instruction set architecture are decoded at 703. For example, the translated instructions are decoded by decoder circuitry such as decoder circuitry 305 or decode circuitry 1040 detailed herein. In some examples, the operations of translation and decoding at 702 and 703 are merged.

Data values associated with the source operand(s) of the decoded one or more instructions of the second instruction set architecture are retrieved and the one or more instructions are scheduled at 705. For example, when one or more of the source operands are memory operands, the data from the indicated memory location is retrieved.

At 707, the decoded instruction(s) of the second instruction set architecture is/are executed by execution circuitry (hardware) such as execution circuitry 109 shown in FIG. 1, execution circuitry 309 shown in FIG. 3, or execution cluster(s) 1060 shown in FIG. 10(B), to perform the operation(s) indicated by the opcode (and in some examples the immediate) of the single instruction of the first instruction set architecture.

In some examples, the instruction is committed or retired at 709.

Examples of architectures, instruction formats, cores, etc. supporting the above are detailed below.

### Example Computer Architectures.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

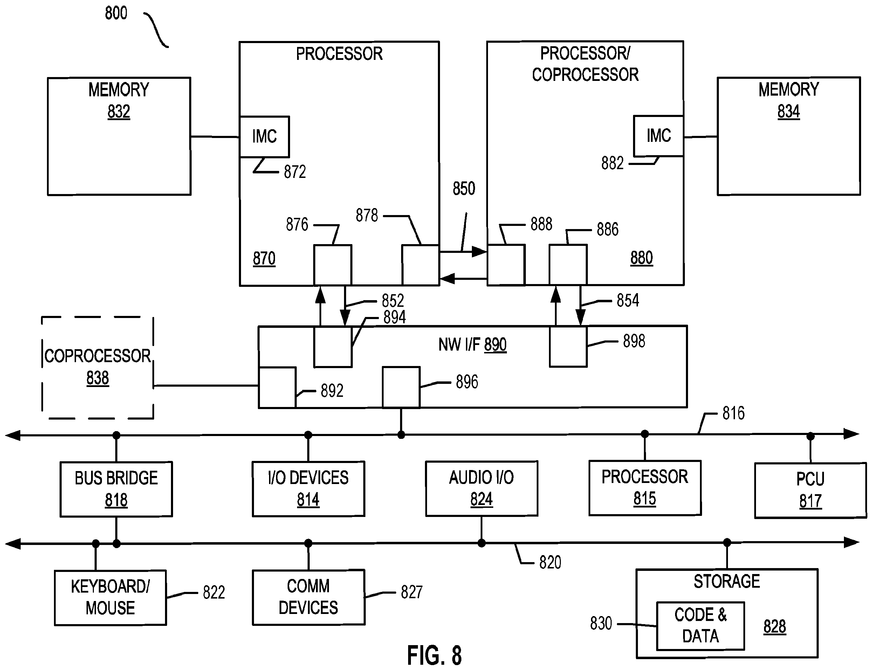

FIG. 8 illustrates an example computing system. Multiprocessor system 800 is an interfaced system and includes a plurality of processors or cores including a first processor 870 and a second processor 880 coupled via an interface 850 such as a point-to-point (P-P) interconnect, a fabric, and/or bus. In some examples, the first processor 870 and the second processor 880 are homogeneous. In some examples, first processor 870 and the second processor 880 are heterogenous. Though the example system 800 is shown to have two processors, the system may have three or more processors, or may be a single processor system. In some examples, the computing system is a system on a chip (SoC).

Processors 870 and 880 are shown including integrated memory controller (IMC) circuitry 872 and 882, respectively. Processor 870 also includes interface circuits 876 and 878; similarly, second processor 880 includes interface circuits 886 and 888. Processors 870, 880 may exchange information via the interface 850 using interface circuits 878, 888. IMCs 872 and 882 couple the processors 870, 880 to respective memories, namely a memory 832 and a memory 834, which may be portions of main memory locally attached to the respective processors.

Processors 870, 880 may each exchange information with a network interface (NW I/F) 890 via individual interfaces 852, 854 using interface circuits 876, 894, 886, 898. The network interface 890 (e.g., one or more of an interconnect, bus, and/or fabric, and in some examples is a chipset) may optionally exchange information with a coprocessor 838 via an interface circuit 892. In some examples, the coprocessor 838 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 870, 880 or outside of both processors, yet connected with the processors via an interface such as P-P interconnect, such that either or both processors' local cache information may be stored in the shared cache if a processor is placed into a low power mode.

Network interface 890 may be coupled to a first interface 816 via interface circuit 896. In some examples, first interface 816 may be an interface such as a Peripheral Component Interconnect (PCI) interconnect, a PCI Express interconnect or another I/O interconnect. In some examples, first interface 816 is coupled to a power control unit (PCU) 817, which may include circuitry, software, and/or firmware to perform power management operations with regard to the processors 870, 880 and/or co-processor 838. PCU 817 provides control information to a voltage regulator (not shown) to cause the voltage regulator to generate the appropriate regulated voltage. PCU 817 also provides control information to control the operating voltage generated. In various examples, PCU 817 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 817 is illustrated as being present as logic separate from the processor 870 and/or processor 880. In other cases, PCU 817 may execute on a given one or more of cores (not shown) of processor 870 or 880. In some cases, PCU 817 may be implemented as a microcontroller (dedicated or general-purpose) or other control logic configured to execute its own dedicated power management code, sometimes referred to as P-code. In yet other examples, power management operations to be performed by PCU 817 may be implemented externally to a processor, such as by way of a separate power management integrated circuit (PMIC) or another component external to the processor. In yet other examples, power management operations to be performed by PCU 817 may be implemented within BIOS or other system software.

Various I/O devices 814 may be coupled to first interface 816, along with a bus bridge 818 which couples first interface 816 to a second interface 820. In some examples, one or more additional processor(s) 815, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 816. In some examples, second interface 820 may be a low pin count (LPC) interface. Various devices may be coupled to second interface 820 including, for example, a keyboard and/or mouse 822, communication devices 827 and storage circuitry 828. Storage circuitry 828 may be one or more non-transitory machine-readable storage media as described below, such as a disk drive or other mass storage device which may include instructions/code and data 830 and may implement the storage 303 in some examples. Further, an audio I/O 824 may be coupled to second interface 820. Note that other architectures than the point-to-point architecture described above are possible. For example, instead of the point-to-point architecture, a system such as multiprocessor system 800 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

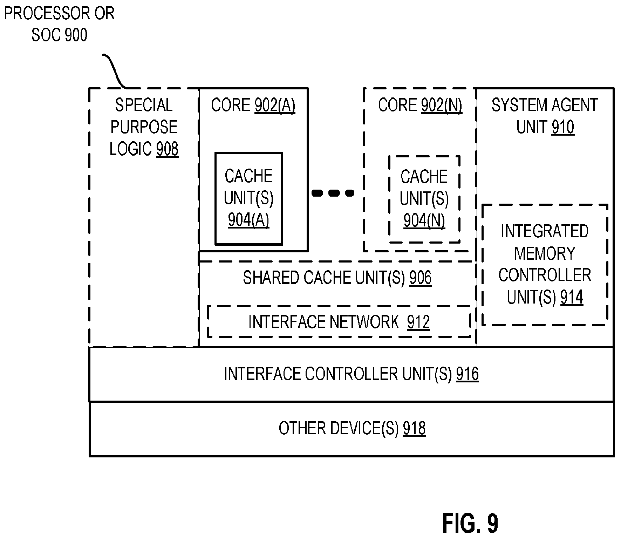

FIG. 9 illustrates a block diagram of an example processor and/or SoC 900 that may have one or more cores and an integrated memory controller. The solid lined boxes illustrate a processor 900 with a single core 902(A), system agent unit circuitry 910, and a set of one or more interface controller unit(s) circuitry 916, while the optional addition of the dashed lined boxes illustrates an alternative processor 900 with multiple cores 902(A)-(N), a set of one or more integrated memory controller unit(s) circuitry 914 in the system agent unit circuitry 910, and special purpose logic 908, as well as a set of one or more interface controller units circuitry 916. Note that the processor 900 may be one of the processors 870 or 880, or co-processor 838 or 815 of FIG. 8.

Thus, different implementations of the processor 900 may include: 1) a CPU with the special purpose logic 908 being integrated graphics and/or scientific (throughput) logic (which may include one or more cores, not shown), and the cores 902(A)-(N) being one or more general purpose cores (e.g., general purpose in-order cores, general purpose out-of-order cores, or a combination of the two); 2) a coprocessor with the cores 902(A)-(N) being a large number of special purpose cores intended primarily for graphics and/or scientific (throughput); and 3) a coprocessor with the cores 902(A)-(N) being a large number of general purpose in-order cores. Thus, the processor 900 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 900 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 904(A)-(N) within the cores 902(A)-(N), a set of one or more shared cache unit(s) circuitry 906, and external memory (not shown) coupled to the set of integrated memory controller unit(s) circuitry 914. The set of one or more shared cache unit(s) circuitry 906 may include one or more mid-level caches, such as level 2 (L2), level 3 (L3), level 4 (L4), or other levels of cache, such as a last level cache (LLC), and/or combinations thereof. While in some examples interface network circuitry 912 (e.g., a ring interconnect) interfaces the special purpose logic 908 (e.g., integrated graphics logic), the set of shared cache unit(s) circuitry 906, and the system agent unit circuitry 910, alternative examples use any number of well-known techniques for interfacing such units. In some examples, coherency is maintained between one or more of the shared cache unit(s) circuitry 906 and cores 902(A)-(N). In some examples, interface controller units circuitry 916 couple the cores 902 to one or more other devices 918 such as one or more I/O devices, storage, one or more communication devices (e.g., wireless networking, wired networking, etc.), etc.

In some examples, one or more of the cores 902(A)-(N) are capable of multi-threading. The system agent unit circuitry 910 includes those components coordinating and operating cores 902(A)-(N). The system agent unit circuitry 910 may include, for example, power control unit (PCU) circuitry and/or display unit circuitry (not shown). The PCU may be or may include logic and components needed for regulating the power state of the cores 902(A)-(N) and/or the special purpose logic 908 (e.g., integrated graphics logic). The display unit circuitry is for driving one or more externally connected displays.

The cores 902(A)-(N) may be homogenous in terms of instruction set architecture (ISA). Alternatively, the cores 902(A)-(N) may be heterogeneous in terms of ISA; that is, a subset of the cores 902(A)-(N) may be capable of executing an ISA, while other cores may be capable of executing only a subset of that ISA or another ISA.

### Example Core Architectures - In-order and out-of-order core block diagram.

FIG. 10(A) is a block diagram illustrating both an example in-order pipeline and an example register renaming, out-of-order issue/execution pipeline according to examples. FIG. 10(B) is a block diagram illustrating both an example in-order architecture core and an example register renaming, out-of-order issue/execution architecture core to be included in a processor according to examples. The solid lined boxes in FIGS. 10(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 10(A), a processor pipeline 1000 includes a fetch stage 1002, an optional length decoding stage 1004, a decode stage 1006, an optional allocation (Alloc) stage 1008, an optional renaming stage 1010, a schedule (also known as a dispatch or issue) stage 1012, an optional register read/memory read stage 1014, an execute stage 1016, a write back/memory write stage 1018, an optional exception handling stage 1022, and an optional commit stage 1024. One or more operations can be performed in each of these processor pipeline stages. For example, during the fetch stage 1002, one or more instructions are fetched from instruction memory, and during the decode stage 1006, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 1006 and the register read/memory read stage 1014 may be combined into one pipeline stage. In one example, during the execute stage 1016, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 10(B) may implement the pipeline 1000 as follows: 1) the instruction fetch circuitry 1038 performs the fetch and length decoding stages 1002 and 1004; 2) the decode circuitry 1040 performs the decode stage 1006; 3) the rename/allocator unit circuitry 1052 performs the allocation stage 1008 and renaming stage 1010; 4) the scheduler(s) circuitry 1056 performs the schedule stage 1012; 5) the physical register file(s) circuitry 1058 and the memory unit circuitry 1070 perform the register read/memory read stage 1014; the execution cluster(s) 1060 perform the execute stage 1016; 6) the memory unit circuitry 1070 and the physical register file(s) circuitry 1058 perform the write back/memory write stage 1018; 7) various circuitry may be involved in the exception handling stage 1022; and 8) the retirement unit circuitry 1054 and the physical register file(s) circuitry 1058 perform the commit stage 1024.

FIG. 10(B) shows a processor core 1090 including front-end unit circuitry 1030 coupled to execution engine unit circuitry 1050, and both are coupled to memory unit circuitry 1070. The core 1090 may be a reduced instruction set architecture computing (RISC) core, a complex instruction set architecture computing (CISC) core, a very long instruction word (VLIW) core, or a hybrid or alternative core type. As yet another option, the core 1090 may be a special-purpose core, such as, for example, a network or communication core, compression engine, coprocessor core, general purpose computing graphics processing unit (GPGPU) core, graphics core, or the like.

The front-end unit circuitry 1030 may include branch prediction circuitry 1032 coupled to instruction cache circuitry 1034, which is coupled to an instruction translation lookaside buffer (TLB) 1036, which is coupled to instruction fetch circuitry 1038, which is coupled to decode circuitry 1040. In one example, the instruction cache circuitry 1034 is included in the memory unit circuitry 1070 rather than the front-end circuitry 1030. The decode circuitry 1040 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 1040 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 1040 may be implemented using various different mechanisms. Examples of suitable mechanisms include, but are not limited to, look-up tables, hardware implementations, programmable logic arrays (PLAs), microcode read only memories (ROMs), etc. In one example, the core 1090 includes a microcode ROM (not shown) or other medium that stores microcode for certain macroinstructions (e.g., in decode circuitry 1040 or otherwise within the front-end circuitry 1030). In one example, the decode circuitry 1040 includes a micro-operation (micro-op) or operation cache (not shown) to hold/cache decoded operations, micro-tags, or micro-operations generated during the decode or other stages of the processor pipeline 1000. The decode circuitry 1040 may be coupled to rename/allocator unit circuitry 1052 in the execution engine circuitry 1050.

The execution engine circuitry 1050 includes the rename/allocator unit circuitry 1052 coupled to retirement unit circuitry 1054 and a set of one or more scheduler(s) circuitry 1056. The scheduler(s) circuitry 1056 represents any number of different schedulers, including reservations stations, central instruction window, etc. In some examples, the scheduler(s) circuitry 1056 can include arithmetic logic unit (ALU) scheduler/scheduling circuitry, ALU queues, address generation unit (AGU) scheduler/scheduling circuitry, AGU queues, etc. The scheduler(s) circuitry 1056 is coupled to the physical register file(s) circuitry 1058. Each of the physical register file(s) circuitry 1058 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 1058 includes vector registers unit circuitry, writemask registers unit circuitry, and scalar register unit circuitry. These register units may provide architectural vector registers, vector mask registers, general-purpose registers, etc. The physical register file(s) circuitry 1058 is coupled to the retirement unit circuitry 1054 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1054 and the physical register file(s) circuitry 1058 are coupled to the execution cluster(s) 1060. The execution cluster(s) 1060 includes a set of one or more execution unit(s) circuitry 1062 and a set of one or more memory access circuitry 1064. The execution unit(s) circuitry 1062 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1056, physical register file(s) circuitry 1058, and execution cluster(s) 1060 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1064). It should also be understood that where separate pipelines are used, one or more of these pipelines may be out-of-order issue/execution and the rest in-order.

In some examples, the execution engine unit circuitry 1050 may perform load store unit (LSU) address/data pipelining to an Advanced Microcontroller Bus (AMB) interface (not shown), and address phase and writeback, data phase load, store, and branches.

The set of memory access circuitry 1064 is coupled to the memory unit circuitry 1070, which includes data TLB circuitry 1072 coupled to data cache circuitry 1074 coupled to level 2 (L2) cache circuitry 1076. In one example, the memory access circuitry 1064 may include load unit circuitry, store address unit circuitry, and store data unit circuitry, each of which is coupled to the data TLB circuitry 1072 in the memory unit circuitry 1070. The instruction cache circuitry 1034 is further coupled to the level 2 (L2) cache circuitry 1076 in the memory unit circuitry 1070. In one example, the instruction cache 1034 and the data cache 1074 are combined into a single instruction and data cache (not shown) in L2 cache circuitry 1076, level 3 (L3) cache circuitry (not shown), and/or main memory. The L2 cache circuitry 1076 is coupled to one or more other levels of cache and eventually to a main memory.

The core 1090 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 1090 includes logic to support a packed data instruction set architecture extension (e.g., AVX1, AVX2), thereby allowing the operations used by many multimedia applications to be performed using packed data.

### Example Execution Unit(s) Circuitry.

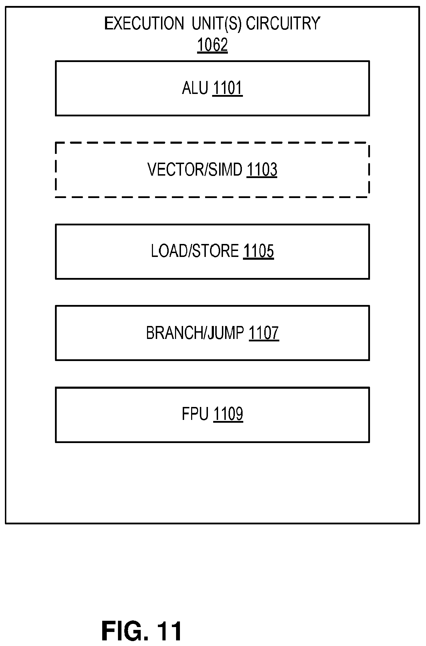

FIG. 11 illustrates examples of execution unit(s) circuitry, such as execution unit(s) circuitry 1062 of FIG. 10(B). As illustrated, execution unit(s) circuity 1062 may include one or more ALU circuits 1101, optional vector/single instruction multiple data (SIMD) circuits 1103, load/store circuits 1105, branch/jump circuits 1107, and/or Floating-point unit (FPU) circuits 1109. ALU circuits 1101 perform integer arithmetic and/or Boolean operations. Vector/SIMD circuits 1103 perform vector/SIMD operations on packed data (such as SIMD/vector registers). Load/store circuits 1105 execute load and store instructions to load data from memory into registers or store from registers to memory. Load/store circuits 1105 may also generate addresses. Branch/jump circuits 1107 cause a branch or jump to a memory address depending on the instruction. FPU circuits 1109 perform floating-point arithmetic. The width of the execution unit(s) circuitry 1062 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

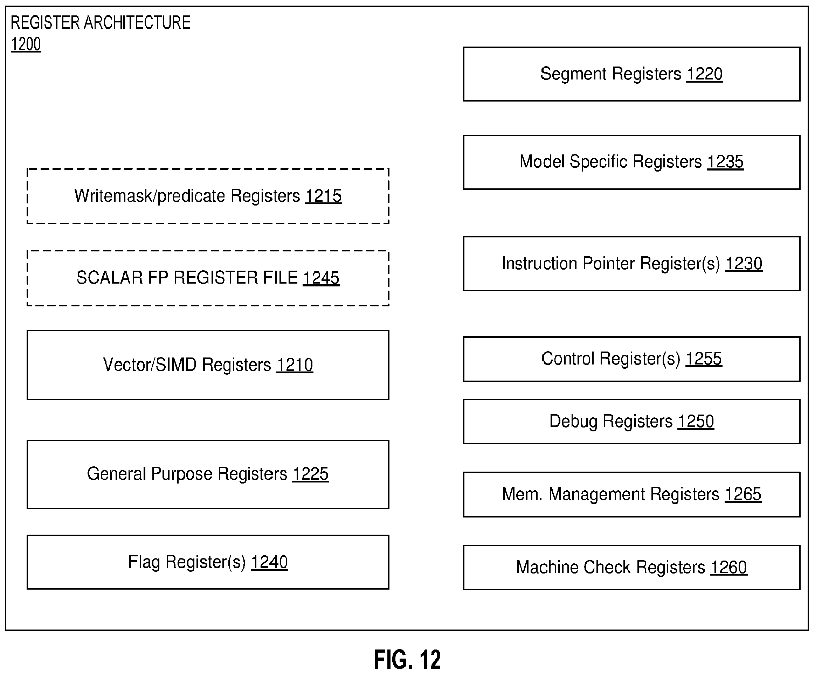

FIG. 12 is a block diagram of a register architecture 1200 according to some examples. As illustrated, the register architecture 1200 includes vector/SIMD registers 1210 that vary from 128-bit to 1,024 bits width. In some examples, the vector/SIMD registers 1210 are physically 512-bits and, depending upon the mapping, only some of the lower bits are used. For example, in some examples, the vector/SIMD registers 1210 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1200 includes writemask/predicate registers 1215. For example, in some examples, there are 8 writemask/predicate registers (sometimes called k0 through k7) that are each 16-bit, 32-bit, 64-bit, or 128-bit in size. Writemask/predicate registers 1215 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1215 corresponds to a data element position of the destination. In other examples, the writemask/predicate registers 1215 are scalable and consists of a set number of enable bits for a given vector element (e.g., 8 enable bits per 64-bit vector element).

The register architecture 1200 includes a plurality of general-purpose registers 1225. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1200 includes scalar floating-point (FP) register file 1245 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1240 (e.g., EFLAGS, RFLAGS, etc.) store status and control information for arithmetic, compare, and system operations. For example, the one or more flag registers 1240 may store condition code information such as carry, parity, auxiliary carry, zero, sign, and overflow. In some examples, the one or more flag registers 1240 are called program status and control registers.

Segment registers 1220 contain segment points for use in accessing memory. In some examples, these registers are referenced by the names CS, DS, SS, ES, FS, and GS.

Model specific registers or machine specific registers (MSRs) 1235 control and report on processor performance. Most MSRs 1235 handle system-related functions and are not accessible to an application program. For example, MSRs may provide control for one or more of: performance-monitoring counters, debug extensions, memory type range registers, thermal and power management, instruction-specific support, and/or processor feature/mode support. Machine check registers 1260 consist of control, status, and error reporting MSRs that are used to detect and report on hardware errors. Control register(s) 1255 (e.g., CR0-CR4) determine the operating mode of a processor (e.g., processor 870, 880, 838, 815, and/or 900) and the characteristics of a currently executing task. In some examples, MSRs 1235 are a subset of control registers 1255.

One or more instruction pointer register(s) 1230 store an instruction pointer value. Debug registers 1250 control and allow for the monitoring of a processor or core's debugging operations.

Memory (mem) management registers 1265 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 1200 may, for example, be used in register file / memory 308, or physical register file(s) circuitry 1058.

### Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

FIG. 13 illustrates examples of an instruction format. As illustrated, an instruction may include multiple components including, but not limited to, one or more fields for: one or more prefixes 1301, an opcode 1303, addressing information 1305 (e.g., register identifiers, memory addressing information, etc.), a displacement value 1307, and/or an immediate value 1309. Note that some instructions utilize some or all the fields of the format whereas others may only use the field for the opcode 1303. In some examples, the order illustrated is the order in which these fields are to be encoded, however, it should be appreciated that in other examples these fields may be encoded in a different order, combined, etc.

The prefix(es) field(s) 1301, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1303 is used to at least partially define the operation to be performed upon a decoding of the instruction. In some examples, a primary opcode encoded in the opcode field 1303 is one, two, or three bytes in length. In other examples, a primary opcode can be a different length. An additional 3-bit opcode field is sometimes encoded in another field.

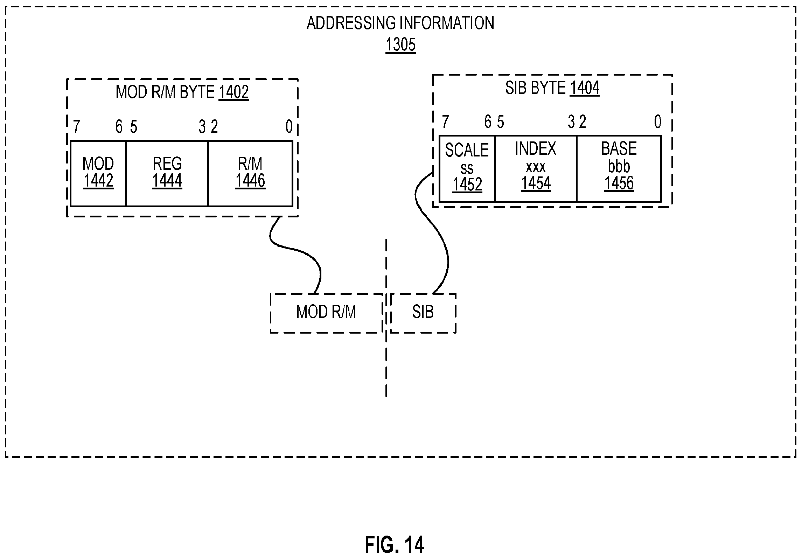

The addressing information field 1305 is used to address one or more operands of the instruction, such as a location in memory or one or more registers. FIG. 14 illustrates examples of the addressing information field 1305. In this illustration, an optional MOD R/M byte 1402 and an optional Scale, Index, Base (SIB) byte 1404 are shown. The MOD R/M byte 1402 and the SIB byte 1404 are used to encode up to two operands of an instruction, each of which is a direct register or effective memory address. Note that both of these fields are optional in that not all instructions include one or more of these fields. The MOD R/M byte 1402 includes a MOD field 1442, a register (reg) field 1444, and R/M field 1446.

The content of the MOD field 1442 distinguishes between memory access and non-memory access modes. In some examples, when the MOD field 1442 has a binary value of 11 (11b), a register-direct addressing mode is utilized, and otherwise a register-indirect addressing mode is used.

The register field 1444 may encode either the destination register operand or a source register operand or may encode an opcode extension and not be used to encode any instruction operand. The content of register field 1444, directly or through address generation, specifies the locations of a source or destination operand (either in a register or in memory). In some examples, the register field 1444 is supplemented with an additional bit from a prefix (e.g., prefix 1301) to allow for greater addressing.

The R/M field 1446 may be used to encode an instruction operand that references a memory address or may be used to encode either the destination register operand or a source register operand. Note the R/M field 1446 may be combined with the MOD field 1442 to dictate an addressing mode in some examples.

The SIB byte 1404 includes a scale field 1452, an index field 1454, and a base field 1456 to be used in the generation of an address. The scale field 1452 indicates a scaling factor. The index field 1454 specifies an index register to use. In some examples, the index field 1454 is supplemented with an additional bit from a prefix (e.g., prefix 1301) to allow for greater addressing. The base field 1456 specifies a base register to use. In some examples, the base field 1456 is supplemented with an additional bit from a prefix (e.g., prefix 1301) to allow for greater addressing. In practice, the content of the scale field 1452 allows for the scaling of the content of the index field 1454 for memory address generation (e.g., for address generation that uses 2^{scale ∗} index + base).

Some addressing forms utilize a displacement value to generate a memory address. For example, a memory address may be generated according to 2^{scale ∗} index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 1307 provides this value. Additionally, in some examples, a displacement factor usage is encoded in the MOD field of the addressing information field 1305 that indicates a compressed displacement scheme for which a displacement value is calculated and stored in the displacement field 1307.

In some examples, the immediate value field 1309 specifies an immediate value for the instruction. An immediate value may be encoded as a 1-byte value, a 2-byte value, a 4-byte value, etc.

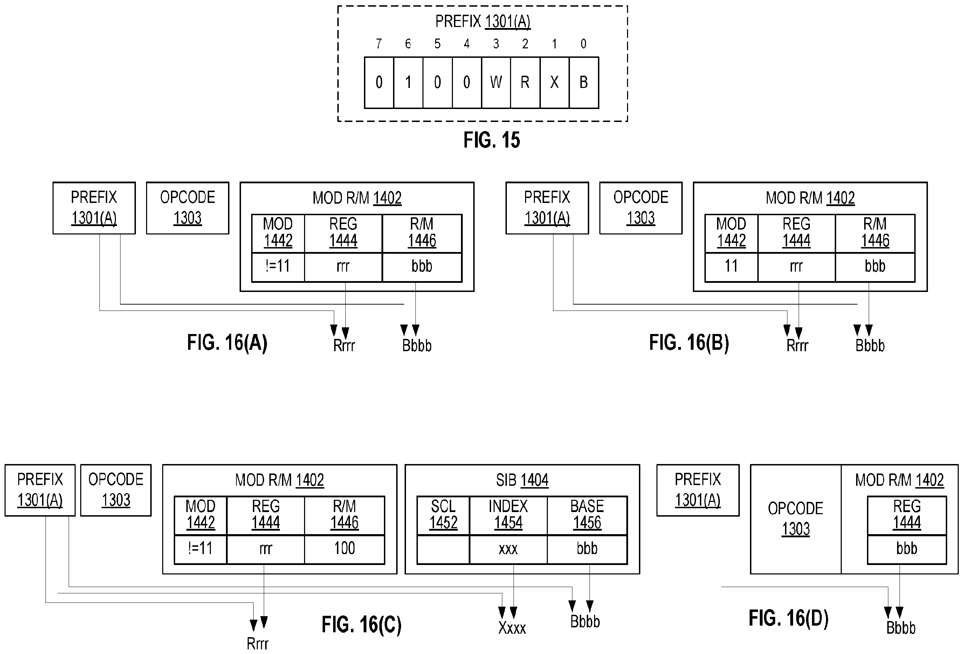

FIG. 15 illustrates examples of a first prefix 1301(A). In some examples, the first prefix 1301(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1301(A) may specify up to three registers using 3-bit fields depending on the format: 1) using the reg field 1444 and the R/M field 1446 of the MOD R/M byte 1402; 2) using the MOD R/M byte 1402 with the SIB byte 1404 including using the reg field 1444 and the base field 1456 and index field 1454; or 3) using the register field of an opcode.

In the first prefix 1301(A), bit positions 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 1444 and MOD R/M R/M field 1446 alone can each only address 8 registers.

In the first prefix 1301(A), bit position 2 (R) may be an extension of the MOD R/M reg field 1444 and may be used to modify the MOD R/M reg field 1444 when that field encodes a general-purpose register, a 64-bit packed data register (e.g., a SSE register), or a control or debug register. R is ignored when MOD R/M byte 1402 specifies other registers or defines an extended opcode.

### Bit position 1 (X) may modify the SIB byte index field 1454.

Bit position 0 (B) may modify the base in the MOD R/M R/M field 1446 or the SIB byte base field 1456; or it may modify the opcode register field used for accessing general purpose registers (e.g., general purpose registers 1225).

FIGS. 16(A)-(D) illustrate examples of how the R, X, and B fields of the first prefix 1301(A) are used. FIG. 16(A) illustrates R and B from the first prefix 1301(A) being used to extend the reg field 1444 and R/M field 1446 of the MOD R/M byte 1402 when the SIB byte 14 04 is not used for memory addressing. FIG. 16(B) illustrates R and B from the first prefix 1301(A) being used to extend the reg field 1444 and R/M field 1446 of the MOD R/M byte 1402 when the SIB byte 14 04 is not used (register-register addressing). FIG. 16(C) illustrates R, X, and B from the first prefix 1301(A) being used to extend the reg field 1444 of the MOD R/M byte 1402 and the index field 1454 and base field 1456 when the SIB byte 1404 being used for memory addressing. FIG. 16(D) illustrates B from the first prefix 1301(A) being used to extend the reg field 1444 of the MOD R/M byte 1402 when a register is encoded in the opcode 1303.

FIGS. 17(A)-(B) illustrate examples of a second prefix 1301(B). In some examples, the second prefix 1301(B) is an example of a VEX prefix. The second prefix 1301(B) encoding allows instructions to have more than two operands, and allows SIMD vector registers (e.g., vector/SIMD registers 1210) to be longer than 64-bits (e.g., 128-bit and 256-bit). The use of the second prefix 1301(B) provides for three-operand (or more) syntax. For example, previous two-operand instructions performed operations such as A = A + B, which overwrites a source operand. The use of the second prefix 1301(B) enables operands to perform nondestructive operations such as A = B + C.

In some examples, the second prefix 1301(B) comes in two forms - a two-byte form and a three-byte form. The two-byte second prefix 1301(B) is used mainly for 128-bit, scalar, and some 256-bit instructions; while the three-byte second prefix 1301(B) provides a compact replacement of the first prefix 1301(A) and 3-byte opcode instructions.

FIG. 17(A) illustrates examples of a two-byte form of the second prefix 1301(B). In one example, a format field 1701 (byte 0 1703) contains the value C5H. In one example, byte 11705 includes an "R" value in bit[7]. This value is the complement of the "R" value of the first prefix 1301(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1446 to encode the instruction operand that references a memory address or encode either the destination register operand or a source register operand.

Instructions that use this prefix may use the MOD R/M reg field 1444 to encode either the destination register operand or a source register operand, or to be treated as an opcode extension and not used to encode any instruction operand.

For instruction syntax that support four operands, vvvv, the MOD R/M R/M field 1446 and the MOD R/M reg field 1444 encode three of the four operands. Bits[7:4] of the immediate value field 1309 are then used to encode the third source register operand.

FIG. 17(B) illustrates examples of a three-byte form of the second prefix 1301(B). In one example, a format field 1711 (byte 0 1713) contains the value C4H. Byte 11715 includes in bits[7:5] "R," "X," and "B" which are the complements of the same values of the first prefix 1301(A). Bits[4:0] of byte 11715 (shown as mmmmm) include content to encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 2 1717 is used similar to W of the first prefix 1301(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1446 to encode the instruction operand that references a memory address or encode either the destination register operand or a source register operand.

Instructions that use this prefix may use the MOD R/M reg field 1444 to encode either the destination register operand or a source register operand, or to be treated as an opcode extension and not used to encode any instruction operand.

For instruction syntax that support four operands, vvvv, the MOD R/M R/M field 1446, and the MOD R/M reg field 1444 encode three of the four operands. Bits[7:4] of the immediate value field 1309 are then used to encode the third source register operand.

FIG. 18 illustrates examples of a third prefix 1301(C). In some examples, the third prefix 1301(C) is an example of an EVEX prefix. The third prefix 1301(C) is a four-byte prefix.

The third prefix 1301(C) can encode 32 vector registers (e.g., 128-bit, 256-bit, and 512-bit registers) in 64-bit mode. In some examples, instructions that utilize a writemask/opmask (see discussion of registers in a previous figure, such as FIG. 12) or predication utilize this prefix. Opmask register allow for conditional processing or selection control. Opmask instructions, whose source/destination operands are opmask registers and treat the content of an opmask register as a single value, are encoded using the second prefix 1301(B).

The third prefix 1301(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1301(C) is a format field 1811 that has a value, in one example, of 62H. Subsequent bytes are referred to as payload bytes 1815-1819 and collectively form a 24-bit value of P[23:0] providing specific capability in the form of one or more fields (detailed herein).

In some examples, P[1:0] of payload byte 1819 are identical to the low two mm bits. P[3:2] are reserved in some examples. Bit P[4] (R') allows access to the high 16 vector register set when combined with P[7] and the MOD R/M reg field 1444. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 1444 and MOD R/M R/M field 1446. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 1301(A) and second prefix 1311(B) and may serve as an opcode extension bit or operand size promotion.

P[18:16] specify the index of a register in the opmask (writemask) registers (e.g., writemask/predicate registers 1215). In one example, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Example examples of encoding of registers in instructions using the third prefix 1301(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | vvvv | | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | MOD R/M reg | GPR, Vector | Destination or Source |
| VVVV | vvvv | GPR, Vector | 2^{nd} Source or Destination |
| RM | MOD R/M R/M | GPR, Vector | 1^{st} Source or Destination |
| BASE | MOD R/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | MOD R/M Reg | k0-k7 | Source |
| VVVV | vvvv | k0-k7 | 2^{nd} Source |
| RM | MOD R/M R/M | k0-k7 | 1^{st} Source |
| {k1} | aaa | k0-k7 | Opmask |

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

FIG. 19 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 19 shows a program in a high-level language 1902 may be compiled using a first ISA compiler 1904 to generate first ISA binary code 1906 that may be natively executed by a processor with at least one first ISA core 1916. The processor with at least one first ISA core 1916 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 1904 represents a compiler that is operable to generate first ISA binary code 1906 (e.g., object code) that can, with or without additional linkage processing, be executed on the processor with at least one first ISA core 1916. Similarly, FIG. 19 shows the program in the high-level language 1902 may be compiled using an alternative ISA compiler 1908 to generate alternative ISA binary code 1910 that may be natively executed by a processor without a first ISA core 1914. The instruction converter 1912 is used to convert the first ISA binary code 1906 into code that may be natively executed by the processor without a first ISA core 1914. This converted code is not necessarily to be the same as the alternative ISA binary code 1910; however, the converted code will accomplish the general operation and be made up of instructions from the alternative ISA. Thus, the instruction converter 1912 represents software, firmware, hardware, or a combination thereof that, through emulation, simulation or any other process, allows a processor or other electronic device that does not have a first ISA processor or core to execute the first ISA binary code 1906.

References to "one example," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

Embodiments of the invention include, but are not limited to:
1. An apparatus comprising:
   decoder circuitry to decode an instance of a single instruction, the instance of the single instruction to include one or more fields to reference a first source operand, one or more fields to reference a second source operand, one or more fields to reference a destination operand, and one or more fields for an opcode, the opcode to indicate execution circuitry is to perform addition of data elements of corresponding data element positions of the first and second source operand, wherein data elements of the second source operand are to be positionally rotated prior to the addition according to rotation information and a result of each addition is to be stored in a corresponding data element position of the destination operand; and
   execution circuitry configured to execute the decoded instruction according to the opcode.
2. The apparatus of example 1, wherein the first source and second source operands are vector registers.
3. The apparatus of example 1, wherein the first source operand is a vector register and the second source operand is a memory location.
4. The apparatus of any of examples 1-3, wherein the instance of the single instruction further comprises a field for an immediate, wherein the immediate is to indicate how data elements of the second source operand are to be positionally rotated.
5. The apparatus of example 4, wherein the data elements of the second source operand are to be positionally rotated are to be rotated 0-degrees, 90-degrees, 180-degrees, or 270-degrees.
6. The apparatus of example 4, wherein the immediate is to further indicate that the result of each addition is to be halved prior to storage in the destination operand.
7. The apparatus of example 6, where the result of each addition is to be halved prior to storage in the destination operand by shifting right by 1 bit.
8. The apparatus of any of examples 1-7, wherein the execution circuitry is further to saturate the result of each addition prior to storage in the destination operand.
9. The apparatus of any of examples 1-8, wherein the addition of the data elements of the first and second source operands comprises adding data elements that have been extended by one bit such that the most significant bit of the stored data element is duplicated.
10. The apparatus of any of examples 1-9, wherein the data elements of the first and second source operands are 16-bit in size.
11. A method comprising:
   translating an instance of a single instruction of a first instruction set architecture to one or more instructions of a second instruction set architecture, the instance of the single instruction to include one or more fields to reference a first source operand, one or more fields to reference a second source operand, one or more fields to reference a destination operand, and one or more fields for an opcode, the opcode to indicate execution circuitry is to perform addition of data elements of corresponding data element positions of the first and second source operand, wherein data elements of the second source operand are to be positionally rotated prior to the addition according to rotation information and a result of each addition is to be stored in a corresponding data element position of the destination operand;
   decoding the one or more instructions of the second instruction set architecture; and
   executing the decoded one or more instructions of the second instruction set architecture to perform operations according to the opcode of the instance of the single instruction of a first instruction set architecture.
12. The method of example 11, wherein the first source and second source operands are vector registers.
13. The method of example 11, wherein the first source operand is a vector register and the second source operand is a memory location.
14. The method of any of examples 11-13, wherein the instance of the single instruction further comprises a field for an immediate, wherein the immediate is to indicate how data elements of the second source operand are to be positionally rotated.
15. The method of example 14, wherein the data elements of the second source operand are to be positionally rotated are to be rotated 0-degrees, 90-degrees, 180-degrees, or 270-degrees.
16. The method of example 14, wherein the immediate is to further indicate that the result of each addition is to be halved prior to storage in the destination operand.
17. The method of example 16, where the result of each addition is to be halved prior to storage in the destination operand by shifting right by 1 bit.
18. The method of any of examples 11-17, wherein the execution circuitry is further to saturate the result of each addition prior to storage in the destination operand.
19. The method of any of examples 11-18, wherein the addition of the data elements of the first and second sources comprises adding data elements that have been extended by one bit such that the most significant bit of the stored data element is duplicated.
20. The method of any of examples 11-19, wherein the data elements of the first and second source operands are 16-bit in size.
21. A system comprising:
   a general purpose processor core;
   a digital signal processing core coupled to the general purpose processor core, the digital signal processing core including:
      decoder circuitry to decode an instance of a single instruction, the instance of the single instruction to include one or more fields to reference a first source operand, one or more fields to reference a second source operand, one or more fields to reference a destination operand, and one or more fields for an opcode, the opcode to indicate execution circuitry is to perform addition of data elements of corresponding data element positions of the first and second source operand, wherein data elements of the second source operand are to be positionally rotated prior to the addition according to rotation information and a result of each addition is to be stored in a corresponding data element position of the destination operand; and
      execution circuitry configured to execute the decoded instruction according to the opcode.
22. The system of example 21, wherein the first source and second source operands are vector registers.
23. The system of example 21, wherein the first source operand is a vector register and the second source operand is a memory location.
24. The system of any of examples 21-23, wherein the instance of the single instruction further comprises a field for an immediate, wherein the immediate is to indicate how data elements of the second source operand are to be positionally rotated.
25. The system of example 24, wherein the data elements of the second source operand are to be positionally rotated are to be rotated 0-degrees, 90-degrees, 180-degrees, or 270-degrees.

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. An apparatus comprising:
decoder circuitry to decode an instance of a single instruction, the instance of the single instruction to include one or more fields to reference a first source operand, one or more fields to reference a second source operand, one or more fields to reference a destination operand, and one or more fields for an opcode, the opcode to indicate execution circuitry is to perform addition of data elements of corresponding data element positions of the first and second source operand, wherein data elements of the second source operand are to be positionally rotated prior to the addition according to rotation information and a result of each addition is to be stored in a corresponding data element position of the destination operand; and
execution circuitry configured to execute the decoded instruction according to the opcode.

2. The apparatus of claim 1, wherein the first source and second source operands are vector registers.

3. The apparatus of claim 1, wherein the first source operand is a vector register and the second source operand is a memory location.

4. The apparatus of any of claims 1-3, wherein the instance of the single instruction further comprises a field for an immediate, wherein the immediate is to indicate how data elements of the second source operand are to be positionally rotated.

5. The apparatus of claim 4, wherein the data elements of the second source operand are to be positionally rotated are to be rotated 0-degrees, 90-degrees, 180-degrees, or 270-degrees.

6. The apparatus of claim 4, wherein the immediate is to further indicate that the result of each addition is to be halved prior to storage in the destination operand.

7. The apparatus of claim 6, where the result of each addition is to be halved prior to storage in the destination operand by shifting right by 1 bit.

8. The apparatus of any of claims 1-7, wherein the execution circuitry is further to saturate the result of each addition prior to storage in the destination operand.

9. The apparatus of any of claims 1-8, wherein the addition of the data elements of the first and second source operands comprises adding data elements that have been extended by one bit such that the most significant bit of the stored data element is duplicated.

10. The apparatus of any of claims 1-9, wherein the data elements of the first and second source operands are 16-bit in size.

11. A method comprising:
translating an instance of a single instruction of a first instruction set architecture to one or more instructions of a second instruction set architecture, the instance of the single instruction to include one or more fields to reference a first source operand, one or more fields to reference a second source operand, one or more fields to reference a destination operand, and one or more fields for an opcode, the opcode to indicate execution circuitry is to perform addition of data elements of corresponding data element positions of the first and second source operand, wherein data elements of the second source operand are to be positionally rotated prior to the addition according to rotation information and a result of each addition is to be stored in a corresponding data element position of the destination operand;
decoding the one or more instructions of the second instruction set architecture; and
executing the decoded one or more instructions of the second instruction set architecture to perform operations according to the opcode of the instance of the single instruction of a first instruction set architecture.

12. The method of claim 11, wherein the first source and second source operands are vector registers.

13. The method of claim 11, wherein the first source operand is a vector register and the second source operand is a memory location.

14. The method of any of claims 11-13, wherein the instance of the single instruction further comprises a field for an immediate, wherein the immediate is to indicate how data elements of the second source operand are to be positionally rotated.

15. The method of claim 14, wherein the data elements of the second source operand are to be positionally rotated are to be rotated 0-degrees, 90-degrees, 180-degrees, or 270-degrees.
